# EUROPEAN PATENT SPECIFICATION

(11) **EP 1 113 629 B1**
(45) Date of publication and mention of the grant of the patent: **21.01.2009**
(21) Application number: 00311492.3
(22) Date of filing: 20.12.2000
(51) Int. Cl.: H04L 12/56

(54) **Session subscription system and method for same**
Vorrichtung und Verfahren zur Kommunikationssitzungsabonnement
Dispositif et procédé d'enregistrement à une session

(30) Priority: 30.12.1999 US 474839
(43) Date of publication of application: 04.07.2001
(73) Proprietor: AT&T WIRELESS SERVICES, INC., Redmond, WA 98052 (US)
(72) Inventor: Chien, Herman, Redmond, WA 98052 (US)
(74) Representative: Suckling, Andrew Michael

(56) References cited:
- WO-A-98/54868
- US-A- 6 006 264
- BOUTABA R ET AL: "A generic platform for scalable access to multimedia-on-demand systems" IEEE JOURNAL ON SELECTED AREAS IN COMMUNICATIONS, IEEE INC. NEW YORK, US, vol. 17, no. 9, September 1999 (1999-09), pages 1599-1613, XP002175200 ISSN: 0733-8716

## Description

### Background

This invention generally concerns network services and, more particularly, a system and method for a user to selectively request network service options for user-initiated sessions.

Quality of service (QOS) is a factor of increasing importance in network operations. Generally, QOS is a guarantee of a level of performance that is made to a user who uses a network such as the Internet for access to the service. The service may be communications, processing, or both. Increasingly, users are afforded an election of a QOS level when accessing a service. In this regard, see, for example Minoli and Schmidt's Internet Architecture (New York: Wiley & Sons) 1999, "Part Three QOS Support on the Internet: Technologies and Protocols". A guaranteed QOS is generally only possible when all network elements in an end-to-end link necessary to provide the service actively participate in a negotiation process and reserve the necessary network resources to deliver the QOS. When some network elements are not able to participate in such negotiations, whether due to architecture, protocols, or cost, a guaranteed QOS cannot be delivered.

All communication networks have constraints upon the service quality of the links that can be provided between elements in the network. Airlink elements in a network typically have constraints related to channel access, delay, and bandwidth. The hardwired or fiber optic components of a network can exhibit capacity limitations, especially when a large number of users seek access to the network. However, such capacity limitations can be addressed, at least partially, by controlling levels of QOS in the network. Often times, one user's QOS can be downgraded to accommodate another user without significant degradation in service to the one user, such as when a user's email delivery is delayed to permit the sending of another user's real-time video data.

Even if some or most elements of a network can be made responsive to user demands for QOS options, the problem remains of guaranteeing a QOS level through all elements of the network. Further, the QOS level guarantee must be maintained by the network as different elements in the network are replaced or upgraded.

Some users demand a high level of service, and pay accordingly for it. However, it is wasteful of resources to use high throughput, wide bandwidth, links when they are not necessary, such as in communications with other users who specify lower, or no, QOS levels. Likewise, it is uneconomical to establish multiple links between a user and a network to make a variety of QOS levels available to the user.

Therefore, it would be advantageous to provide a selectable QOS when a user seeks communication network services through a resource-limited network.

It would be advantageous if a communication network having QOS limitations would permit the user the option of selecting a QOS level from a field of QOS services.

It would be advantageous to provide a communication network service level that is responsive to a user's specification.

It would be advantageous if the service level of a communications network could be made optional.

It would be advantageous if rational QOS level choices could be offered by building a relationship between the QOS level and billing and rate plans.

It would be advantageous to provide a mechanism for the user to communicate desired QOS using native data addressing and transmission protocols within a network and not have to rely on specific protocols meant for QOS requests and negotiation.

R Boutaba et al. disclose, in "A Generic Platform for Scalable Access to Multimedia On-demand Systems", IEEE Journal on Selected Areas in Communications, Vol. 17, No. 9 pp1599-1613 (1999), a method of distributing requests for multimedia objects among a plurality of multimedia servers. When a request for a multimedia object is received, it is initially checked how many of the available servers have the necessary criteria for handling the request. The request is then allocated to one of the available servers that has the necessary criteria, in accordance with the workload of the servers.

WO 98/54868 discloses a data access transport service in which data service providers (DSPs) share dial-in access resources. It discloses a system in which a network controller performs the role of service partitioning, quota enforcement, and resource load balancing to ensure that a DATS provider can provide a high quality of service (availability response time and consistent band width) to subscribed DSPs and their end users.

A first aspect of the present invention provides a method of transferring information at a requested quality of service (QOS) level, the method comprising: establishing a relationship between a first plurality of addresses of respective inputs on a service request server and a first plurality of QOS levels, each address of the first plurality of addresses corresponding to a respective QOS level for the transfer of information; selecting, by a user, a desired QOS level for the transfer of information by providing, to a first address facility, an address of the first plurality of addresses corresponding to the desired QOS level; communicating between the first address facility and an address input on the service request server, the address input corresponding to the address; configuring the first access facility to provide information transfer services at the desired QOS level based, at least in part, on resource allocation information provided by a session server to the first access facility; and receiving a first service permitting the transfer of information at the desired QOS level.

A second aspect of the present invention provides a system for automatically requesting a QOS level in the transfer of information, the system comprising: a first access facility for receiving a request for a selectable service; a service request server having a plurality of addresses, each address corresponding to a respective QOS level for the transfer of information, the service request server further having a first plurality of address inputs and an output port for, when one of the plurality of addresses is input to the service request server in response to the address being provided by a user in the request for the selectable service, outputting a first QOS level corresponding to the one of the plurality of addresses input to the service request server; and a session server having an input connected to said service request server to receive the first QOS level, and an output to provide a first resource allocation corresponding to the first QOS level, whereby the first access facility may provide the requested service.

Preferred features of the invention are defined in the dependent claims.

This invention enables non-negotiating network elements to enter into a QOS-negotiated end-to-end link, with the negotiated QOS level approaching, or reaching a desired or specified QOS. A user participates in the process by creating a session whose service type is consistent with a QOS level required by an application or protocol to be run over that session.

Accordingly, a method is provided for transferring information in a network at a requested QOS level. The method includes:
generating a switching map, with relationships between a list of service request addresses in the network and a list of QOS levels offered for the transfer of information through the network;
selecting a service request address; and
receiving a QOS level corresponding to the selected service request address.

The communication paths for requesting the QOS can be different communication links from those used to transfer the information which is the subject of the QOS request. For example, the address can be entered to a service request network via a telephone, with the data communications link that is the subject of the request being a cable TV service. The dialing of a specific phone number corresponds to selecting a desired cable TV program or channel. A service (or function) in a communications network, responsive to the dialed number, is responsible for allocating the resources necessary with the cable company to provide communicating at the requested QOS level.

Alternately, the link used to provide the QOS address is the same as the data link. For example, dialing an Internet address from a PC to request a service level from an Internet Service Provider (ISP). The requested service is received on the same line used to enter the address.

The system of the present invention can be embodied thought the use of three main components. An access facility interfaces with a user. The user seeks a specific level type of service from the access facility. Using the access facility, a request is made to a service request server for a QOS. The service request server has a plurality of addresses, each address corresponds to a different QOS. The QOS is selected in response to the address used to interface the service request server to the access facility. For example, the access facility may be a telephone. A user dials a telephone number corresponding to a service request server input address. Different telephone numbers are used to request different QOS levels of service.

The system also includes a session server in communication with the service request server. The session server receives a request for a specified QOS. The session server determines the resources available for use with the access facility, and allocates resources sufficient to support the requested QOS. The advantage of the system is that only the session server need be updated as the access facility is updated or changed, or if the user's rights to use the access facility change. Further, the session server can be used to allocate resources in more than one kind of access facility. In fact, the session server can be used to allocate resources for user services in multiple communication networks at the same level of service. Such a function supports a network tunneling function, such as when messages, originated in a private access facility, are passed through a public access facility communications link. The session server maintains a record of resources in both the private and public access facilities, and is able to allocate resources in both access facilities to provide a consistent QOS as service is extended across both networks. The session server can also be used to check the subscription status and subscription services enjoyed by the user. The requested QOS is allocated and billed in response to the subscription check.

### Brief Description of the Drawings

Fig. 1 is a block diagram schematic of the present invention system for automatically requesting a quality of service (QOS) level in the transfer of information.
Fig. 2 illustrates an aspect of the invention of Fig. 1 where an auxiliary access facility is used.
Fig. 3 illustrates an aspect of the invention of Fig. 1 where the first access facility is a wireless communications network.
Fig. 4 illustrates an aspect of the invention of Fig. 1 where a QOS is established across communication networks to permit tunneling at a consistent level of service.
Fig. 5 is a flowchart illustrating the present invention method for transferring information at a requested quality of service (QOS).

### Detailed Description of the Preferred Embodiment

The invention concerns a session-based feedback mechanism that determines the quality level for a service requested by a user via a service network and automatically configures the facilities through which the user accesses the service network. Based upon the type of service requested, the user's access facilities are automatically configured to operate in such a manner as to support the requisite QOS level. The feedback mechanism bypasses the user's access facilities in a QOS negotiation while ensuring that they will support the requisite QOS level.

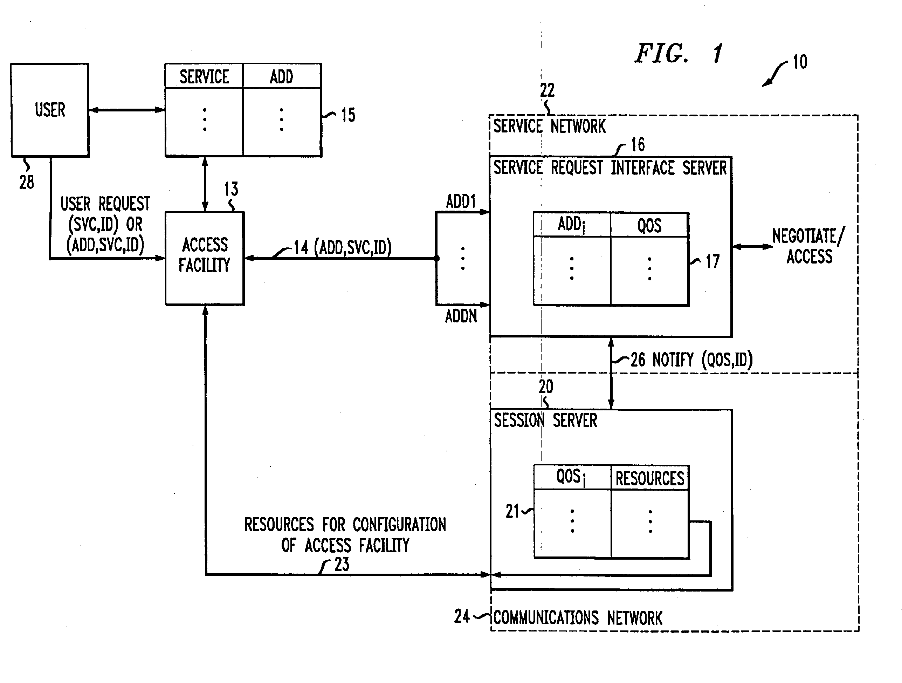

Fig. 1 is a block diagram schematic of the present invention system for automatically requesting a quality of service (QOS) level in the transfer of information. The system 10 includes an first access facility 13 through which a user submits a request for a selectable service to be obtained by way of a service network 22. The first access facility 13 communicates on a network 14 with a service request interface server 16 that is a recognized and addressable element in the service network 22. The first access facility 13 provides a first address on line 14 that corresponds to a first service. In a fundamental aspect of the invention, a human operator uses the first access facility 13 to communicate the selection of an address at the service request server 16. Then, an address in service network 22 is used to represent a specific QOS level. In more sophisticated aspects of the invention the access facility translates the requirement of a user, human or machine, into an address selection that is communicated to service request server 16. Without intending any limitation, the first access facility 13 is a landline telephone, cable modem, mobile wireless, fixed wireless, and public Internet system in different aspects of the invention.

The service request interface server 16 has a first plurality of address inputs selectably connectable to the output of the first access facility on line 14. These addresses are represented as ADD1 through ADDN in Fig. 1. The service request server 16 includes a connection 26 which provides a first QOS corresponding to the first address. The service request server 16 has a connection 26 with a session server 20, that is a component of a communication network 24. The session server 20 receives the first QOS from the service request server and provides, via an interface 23 with the first access facility 13, a first resource allocation corresponding to the first QOS. The first access facility 13 receives the first resource allocation on interface 23 and provides first service in response to receiving the first resource allocation from the session server 20.

The first access facility 13 maintains, or has access to, a service access map 15 which relates services requested by a user to an address in a plurality of addresses that are recognized by the service request interface server (hereinafter "server 16"). That is, the first access facility 13 includes a database 15 of a first plurality of services cross-referenced with a first plurality of service request server addresses. In one aspect of the invention, a machine, PC, or human user 28 maintains, or has access to map 15, so that the address is selected by user 28. For example, the service access map 15 may be even be a list written on paper, or committed to memory by human operator 28. Then, the QOS level is chosen as a direct consequence of the user selecting an address that is known to correspond to the desired service. Regardless of whether the address is selected by user 28 or access facility 13, the address is passed to service request server 16 on line 14 to select a QOS.

The server 16 maintains, or has access to, a map 17 that relates the service request server addresses to quality of service levels that can be negotiated with elements of the service network 22 for access to services at defined QOS levels. That is, the service request server 16 includes a database 17 of a first plurality of addresses cross-referenced with a first plurality of QOS levels.

Likewise, the session server 20 (hereinafter "server 20") maintains, or has access to, a map 21 that relates the QOS levels of the map 17 to resources that are available for configuration of the first access facility 13. That is, the session server 20 includes a database 21 of a first plurality of QOS levels cross-referenced with a first plurality of first access facility resource allocations. The resources include, without limitation, algorithms and rules by which the first access facility 13 (or components thereof) can be configured in order to service communications between a user acting through the first access facility 13 and the server 16 in a manner that is necessary and sufficient to support a QOS level signified by a service request server address.

In operation, a user request for service on the service network 22 is received by the first access facility 13. The user request contains a designation of the service (SVC) and the ID of the user (SVC, ID). In this regard, the term user signifies not only a human, but also a machine or element such as a PC connected to the first access facility 13 which generates or forwards a service request. Based on the service identified in the request, the first access facility 13, using the map 15, determines a service request server address (ADD) of the server 16 with which to establish a session for access to the requested service. The user request is forwarded to the service request server as an address message (ADD, SVC, ID). As mentioned above, however, the user request is simply the address in the fundamental aspect of the invention (ADD, ID), such as when the user already "knows" the service (SVC) associated with the choice of address (ADD). The address may be an IP address, an Ethernet MAC address, TCP port number, or other identifier.

During the session, a particular QOS level is established and maintained. In response to initiation of a session through one of the service request server addresses, the server 16 consults the map 17 to determine a QOS level for services to be obtained on the service network 22 during the session. The server 16 negotiates with components of the service network 22 for the QOS level and maintains the negotiated capability throughout the session. At the same time, the server 16 notifies the server 20 on the connection 26 that a session has been established and provides the QOS level for the session and the ID of the user. The server 20, using the map 21, determines the resources that are necessary for the designated QOS level and, on communication line 23 provides the resources to the elements of the first access facility 13. These resources configure the elements of the first access facility 13, for example, by establishing a priority to give to traffic to and from the identified user. Such policies may include advancing higher priority packets to the head of queues, choosing to allocate more CPU resource to a higher priority packet, activating prioritized airlink channel access rules for higher priority packets, adjusting channel allocations, and enabling an airlink base station to allocate shared airlink resources appropriately among competing remote units (when the access facility 13 is a wireless communications network).

In Fig. 1, schematic representations of various elements are given. For example, the means by which the first access facility 13 and the servers 16 and 20 determine responses relating to QOS are illustrated as maps 15, 17, and 21. In fact, this is merely to assist in the description of the invention since tables, trees, linkages, algorithms, or processes can be used to establish the relationships that are illustrated by the maps.

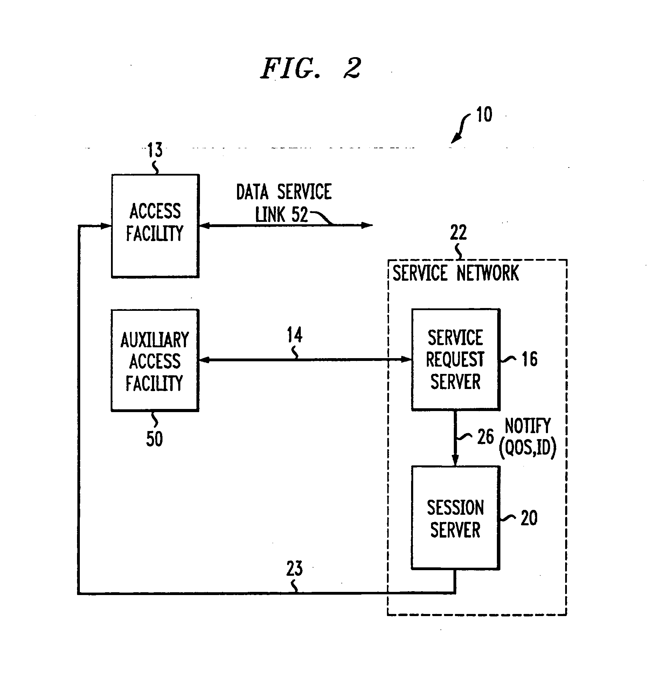

Fig. 2 illustrates an aspect of the invention of Fig. 1 where an auxiliary access facility 50 is used. The auxiliary access facility 50 is used to communicate the address, and hence the desired QOS, to the service request server 16 via line 14. However, the service is being requested for first access facility 13. The service typically corresponds to the throughput or delay associated with data service link 52 on which information is transferred. For example, the auxiliary access facility 50 may be a telephone, with link 14 being a public telephone line. The telephone 50 can be used to order special services for first access facility 13 which may be cable TV service. Note, in various aspects of the invention the data line being serviced to a specified QOS can be a separate line, as line 52, or transfer of information may occur on line 14, the line used to select the QOS address, as shown in Fig. 1.

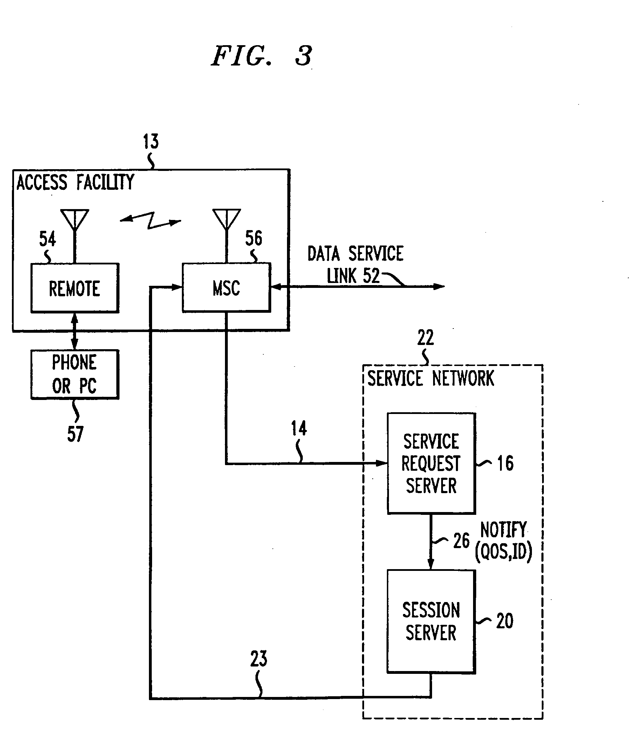

Fig. 3 illustrates an aspect of the invention of Fig. 1 where the first access facility 13 is a wireless communications network. Wireless network 13 includes a remote wireless communications unit 54 and a mobile switching center 56. The airlink between remote unit 54 and MSC 56 is used to request addresses and to transfer information at a requested level of service. The wireless communications network 13 transfers information to a user telephone or PC 57. Because of contention with other remote units in the system 13 (not shown), the airlink may be the most constricting part of the communications network. This contention between units may make it desirable to prioritize communications to and from these remote units. The session server 20 allocates resources in the wireless network 13 which include bandwidth allocation, remote unit channel access privileges, the resequencing of queued data, and scheduled time allocations. The differences in resource allocation by the access facility 13 result in services which include non-real time, real-time, low delay, high throughput information transfers, and combinations of the above-mentioned services. It should be noted that the resource allocation and service specifics are merely listed as examples, and neither are they limited to use in just the wireless network access facility 13 aspect of the invention.

The session server 20 distributes directives to the network management elements of access facility 13 which result in algorithms, policies, and defined types of service to be provisioned in the remote unit 54 and MSC 56. The remote unit 54 and MSC 56 use this provisioned information to classify traffic by type of service and execute the required algorithms and policies to deliver the required grade of service.

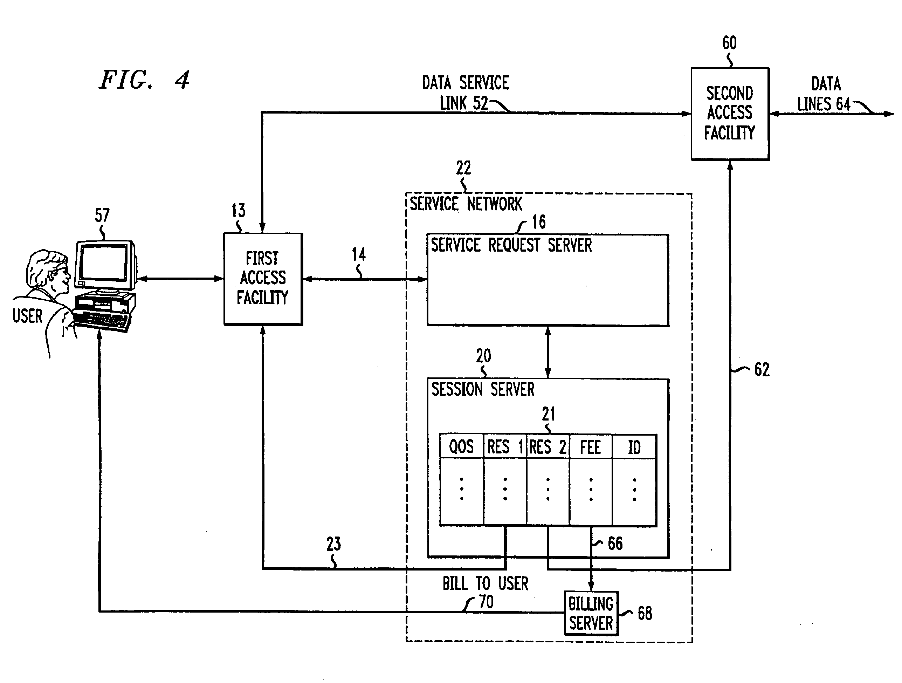

Fig. 4 illustrates an aspect of the invention of Fig. 1 where a QOS is established across networks to permit tunneling at a consistent level of service. A second access facility 60 is included to provide selectable information transfer services. The second access facility 60 has an input on line 62 connected to the output of the session server 20, and an input on line 52 connected to the output of the first access facility 13. The session server 20 provides a first resource allocation to the second access facility 60 in response to receiving the first QOS on line 26 from service request server 16. As mentioned above, the map 21 which is maintained (or accessed by) the session server 20, cross references the QOS levels with resource allocations to the first access facility 13. A similar map is maintained to cross reference the QOS levels with resource allocations in the second access facility 60. In this way a common QOS can be obtained for both system. That is, the first service (originally established for the first access facility 13) is continued from the first access facility 13 through the second access facility 60 on data lines 64 at a consistent QOS level.

For example, the second access system 60 is an ISP. A user requesting a certain level of server in the ISP through the first access facility 13 would seek to maintain that quality of service in all the connecting links. The present invention supports such tunneling concepts by maintaining a session server database that can be configured to support multiple, and connecting communications networks.

Tunneling is a mechanism used to transport data expressed in "Format A" through an access facility that can only carry "Format B". This is done by wrapping Format A inside Format B packets such that the desired data traverses the Format B access facility successfully and emerges on the other side for further handling. With the Internet, a user could be operating a first access facility 13 where "private" IP addresses are a large part of the infrastructure that would be invalid in the second access facility 60 (i.e., a public Internet network). Subscribers (i.e., a subscriber's PC) to the first access facility 13 would also have legal "public" addresses that are valid in the second access facility 60. That is, the subscriber's PC has both a public (for access facility 60) and a private address (for access facility 13) for participation in both networks. Tunneling is used to temporarily wrap the publicly addressed packets (in second access facility 60 on line 64) inside packets with private addresses in order to "tunnel" the packets through the first access facility 13 on line 52 to be released to the PC 57 with the public address, or to the public Internet 60 after passage through the first access facility 13.

Session server 20 has the capacity to operate in multiple networks. As above, session server 20 permits a user to enjoy a requested level of QOS without the need of special QOS-supporting negotiation protocols used in a closely related or privately controlled access facility 13. However, the present invention concept can also be applied to access facilities not under the control, or directly linked, to the session server 20, such as second access facility 60. The session server 20, if enabled with protocols sufficient to negotiate with access facility 60, can request, negotiate, and extend the QOS being enjoyed in the first access facility 13 to the second access facility 60.

In some aspects of the invention, line 62 is unnecessary for the delivery of resource allocation instructions which directly control the second access facility 60. Alternately, connection 62 is a public network, such as a telephone line. In another alternative, resource allocations are delivered to access facility 13, and transferred on line 52, to second access facility 60. For example, when second access facility 60 represents a public Internet network, elements in the packet header are used to implicitly identify all of the potential protocols and applications that should enjoy a particular grade of service. Such services are provided without knowledge of current, or future protocols and application. As new protocols and applications emerge, they can be mapped into existing types of service, or into a new type of service to be defined. The new type of service is invoked as any previous type, by establishing a session with a specific session server 20. A second novelty is the linkage of the type of service with the subscription information to manage resources at the affected network elements.

Although session server 20 is depicted in Fig. 4 as having a single map 21 for cross referencing QOS to resources, such a service could also be embodied as a series of parallel servers, one session server for each access facility. Then, only the session server supporting a specific access facility would need to shut down for updating as the corresponding access facility was reconfigured.

In some aspects of the invention the session server 20 includes a database 21 of a first plurality of fees cross-referenced to the first plurality of QOS level. The session server 20 generates a first session service bill in response to the selection of the first QOS level. Specifically, fee information is communicated on line 66 to a billing server 68. Billing server 68 generates a bill to the user of the first access facility 13 on line 70. In some aspects of the invention a separate session server is maintained to cross reference fees and QOS levels, independent of the cross-referenced list of QOS levels and resource allocations of map 21.

Returning briefly to Fig. 1, in some aspects of the invention the first access facility 13 supplies a first user identity (ID) to the service request server 16 on line 14 when the first address is submitted. The service request server supplies the first user identity, with the first QOS, on line 26 to the session server 20. Returning again to Fig. 4, the session server 20 checks the first access facility subscription status and subscription type associated with the first user, and allocates resources in response to the subscription checking. That is, session server 20 maintains the fee schedules associated with each level of QOS. The session server 20 sets into motion procedures (session service bill) to charge the user a subscription fee based on the requested, and delivered, QOS. In some cases, the user is alerted to the fees as the service is used. The subscription status of a remote user is, likewise, monitored as a result of the generation of a session service bill. In some aspects of the invention session server maintains, or has access to, a cross-referenced database (map) of user IDs and available resources, such as map 21 to perform the above-mentioned tasks.

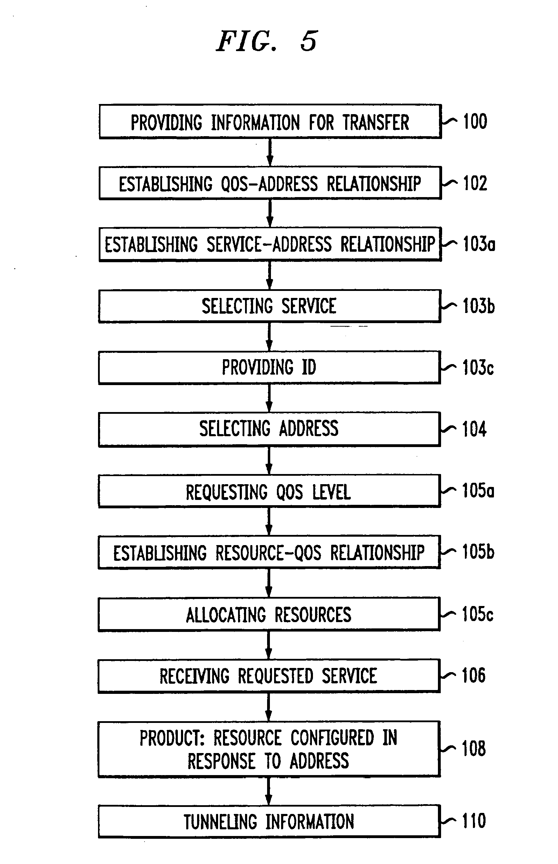

Fig. 5 is a flowchart illustrating the present invention method for transferring information at a requested quality of service (QOS). Although the following process is numbered in the interest of clarity, no order should be inferred from the numbering unless explicitly stated. Step 100 provides information for transfer. Step 102 establishes a relationship between a first plurality of addresses and a first plurality of QOS levels for the transfer of information. Step 104 selecting a first address. In Step 106 a first service is received which permits the transfer of information at a first QOS level corresponding to the first address. The reception of the first service in Step 106 includes a service selected from the group of services consisting of non-real time, real-time, low delay, high throughput information transfers, and combinations of the above-mentioned services. Step 108 is a product, where resource facilities are automatically configured in response to the selection of an address.

Step 100 provides a service network, or a service request server, and a communications network, or a session server. Then, the establishment of a relationship between the address and QOS in Step 102 includes accessing a map in a service request server which relates each address to a QOS that can be negotiated with a session server. Some aspects of the invention comprise further steps. Step 105a, in response to selecting the first address, requests the first QOS level from the session server.

Typically, Step 100 includes a first access facility to provide information transfer services, and includes further steps. The first access facility can be a landline telephone, cable modem, mobile wireless, fixed wireless system, or public Internet system, in various aspects of the invention. Optionally, Step 103a establishes a relationship between a first plurality of services and a first plurality of service request server addresses, and Step 103b selects a service corresponding to the first address. The establishment of a relationship between services and service request server addresses in Step 103a includes accessing a service access map in the access facility which relates each service to an address in the service request server. Alternately, the process is initiated in Step 104, such as when a when already knows the address to select for the required service.

Step 105b establishes a relationship between a first plurality of access facility service resources and a first plurality of QOS levels. The establishment of a relationship between access facility service resources and QOS levels in Step 105b includes accessing a map in the session server which relates QOS levels to services that are available for configuration of the access facility. Step 105c allocates first access facility resources to provide a first service in response to requesting the first QOS in Step 105a.

In some aspects of the invention a further step precedes the selection of the first address in Step 104. In Step 103c a user identification is provided. Then, the selection of the first address in Step 104 includes providing the user identification to the service request server. The requesting of the first QOS in Step 105a, likewise, includes providing the user identification to the session server. The allocation of access facility resources in Step 105c is responsive to the user identification provided. Specifically, the session server checks the user's access facility subscription status and subscription type, and allocates access facility resources in response to the subscription check.

In some aspects of the invention Step 100 provides at least one remote wireless communication unit. The allocation of service resources in Step 105c includes selecting priorities from the group consisting of bandwidth allocation, remote unit channel access privileges, resequencing of queued data, and scheduled time allocations.

In another aspect of the invention Step 100 a second access facility in addition to the first. The establishment of a relationship between a first plurality of addresses and a first plurality of QOS levels for the transfer of information in Step 102 includes establishing a relationships with a first plurality of QOS levels in both the first and second access facilities. The allocation of resources in Step 105c includes allocating second access facility resources to provide a first service in the second access facility, in response to requesting the first QOS, in addition to allocating first access facility resources to provide a first service in the first access facility. The reception of the first service in Step 106 permits the transfer of information at a first QOS level corresponding to the first address from the first access facility to the second access facility. That is, the first service is continued from the first access facility to the second access facility. Then, the method includes a further step. Step 110 tunnels information from the first access facility through the second access facility at a consistent QOS.

The above-described invention is "future-proof. Any current or future application, as long as it uses the underlying network protocol used to establish a currently existing relationship between the PC and session server (i.e. a session), will enjoy the QOS set for that session. Although the invention has been characterized as employing a session server to provide a QOS level responsive to an address selection, the present invention concept is applicable to any other means of selectably or switchably providing a requested QOS level for a specific interface session. Other variation and embodiments of the present invention will occur to those skilled in the art.

## Claims

1. A method of transferring information at a requested quality of service (QOS) level, the method comprising:
establishing a relationship between a first plurality of addresses (ADD1...ADDN) of respective inputs on a service request server (16) and a first plurality of QOS levels, each address of the first plurality of addresses corresponding to a respective QOS level for the transfer of information;
selecting, by a user, a desired QOS level for the transfer of information by providing, to a first access facility (13), an address of the first plurality of addresses corresponding to the desired QOS level;
communicating between the first access facility (13) and an address input on the service request server (16), the address input corresponding to the address;
configuring the first access facility (13) to provide information transfer services at the desired QOS level based, at least in part, on resource allocation information provided by a session server to the first access facility (13); and
receiving a first service permitting the transfer of information at the desired QOS level.

2. A method as claimed in claim 1 wherein the establishment of a relationship between the address and QOS level include accessing a first map (17) in a service request server (16) which relates individual ones of the plurality of addresses to corresponding QOS levels that can be negotiated with the session server (20).

3. A method as claimed in claim 2, further comprising:
in response to selecting the address, the service request server (16) requesting the desired QOS level from the session server (20).

4. A method as claimed in claim 1, 2 or 3 wherein the first access facility (13) provides information transfer services, and further comprising:
allocating first access facility resources to provide the first service in response to the resource allocation information provided by the session server (20).

5. A method as claimed in claim 1, 2, 3 or 4, further comprising:
establishing a relationship between a first plurality of access facility service resources and a first plurality of QOS levels.

6. A method as claimed in claim 5 in which the establishment of a relationship between access facility service resources and QOS levels includes accessing a second map (21) in the session server (20) which relates QOS levels to services that are available for configuration of the first access facility (13).

7. A method as claimed in any preceding claim 6, and further comprising, preceding the step of providing the address:
establishing a relationship between a first plurality of services and a first plurality of service request server addresses; and
selecting a service corresponding to the address.

8. A method as claimed in claim 7 in which the establishment of a relationship between services and service request server addresses includes accessing a service access map (15) in the first access facility (13) which relates each service to an address in the service request server (16).

9. A method as claimed in any preceding claim and further comprising, preceding the step of providing the address, providing a user identification; and
in which the allocation of access facility resources is responsive to the user identification provided.

10. A method as claimed in claim 9 in which the step of providing the address includes providing the user identification to the service request server (16);
in which the selecting of the desired QOS level includes providing the user identification to the session server (20), and
in which the session server (20) checks a user access facility subscription status and subscription type, and allocates access facility resources in response to the subscription check.

11. A method as claimed in any preceding claim wherein the first access facility (13) is selected from the group consisting of landline telephone, cable modem, mobile wireless, fixed wireless systems, and public Internet systems.

12. A method as claimed in any preceding claim wherein at least one access facility remote wireless communication unit is provided, and in which the allocation of service resources includes priorities selected from the group consisting of bandwidth allocation, remote unit channel access privileges, resequencing of queued data, and scheduled time allocations.

13. A method as claimed in any preceding claim wherein a second access facility (60) is provided, and further comprising:
configuring the second access facility (60) to provide information transfer services at the desired QOS level based, at least in part, on resource allocation information provided by the session server (20) to the second access facility (60), in which the reception of the first service permits the transfer of information at a first QOS level, corresponding to the address, from the first access facility to the second access facility; and
tunnelling information from the first access facility (13) through the second access facility (60) at a consistent QOSlevel.

14. A method as claimed in claim 1 in which the reception of the first service includes a service selected from the group of services consisting of non-real time, real-time, low delay, high throughput information transfer, and combinations of the above-mentioned services.

15. A system for automatically requesting a quality of service (QOS) level in the transfer of information, the system comprising:
a first access facility (13) for receiving a request for a selectable service;
a service request server (16) having a plurality of addresses (ADD1...ADDN), each address corresponding to a respective QOS level for the transfer of information, the service request server (16) further having a first plurality of address inputs and an output port for, when one of the plurality of addresses is input to the service request server in response to the address being provided by a user in the request for the selectable service, outputting to the session server (20) a first QOSlevel corresponding to the one of the plurality of addresses input to the service request server (16); and
a session server (20) having an input connected to said service request server (16) to receive the first QOS level, and an output to provide to the first access facility (13), a first resource allocation corresponding to the first QOSlevel, whereby the first access facility is adapted to provide the requested service.

16. A system as claimed in claim 15 in which said first access facility (13) has an input connected to said session server output to receive the first resource allocation, said first access facility (13) providing a first service in response to receiving the first resource allocation

17. A system as claimed in claim 15 or 16 in which said service request server (16) includes a database (17) of a first plurality of addresses cross-referenced with a first plurality of QOS levels.

18. A system as claimed in claim 15, 16 or 17 in which said session server (20) includes a database (21) of a first plurality of QOS levels cross-referenced with a first plurality of access facility resource allocations.

19. A system as claimed in claim 15, 16, 17 or 18 in which said first access facility (13) includes a database (15) of a first plurality of services cross-referenced with a first plurality of service request server addresses, and an output to provide a first address corresponding to a first service.

20. A system as claimed in any of claims 15 to 19, further comprising:
a second access facility (60) to provide a selectable service, having an input connected to the output of said session server (20) and an input connected to the output of said first access facility (13);
in which said session server (20) provides a second resource allocation to said second access facility (60) in response to receiving the first QOSlevel, and
in which the first service is continued from said first access facility (13) through second access facility (60) at a consistent QOS level.

21. A system as claimed in any of claims 15 to 20 in which said first access facility (13) is a wireless communication network including a remote unit and a Mobile Switching Centre (MSC);
in which said session server (20) allocates resources selected from the group consisting of bandwidth allocation, remote unit channel access privileges, resequencing of queued date, and scheduled time allocation.

22. A system as claimed in any of claims 15 to 21 in which said first access facility (13) is selected from the group consisting of landline telephone, cable modem, mobile wireless, fixed wireless systems, and public Internet systems.

23. A system as claimed in claim 16 in which the first service is selected from the group consisting of non-real time, real-time, low delay, high throughput information transfer, and combinations of the above-mentioned services.

24. A system as claimed in any of claims 15 to 23 in which said first access facility (13) supplies a first user identity to said service request server (16) with the first address;
in which said service request server (16) supplies the first user identity to said session server (20), with the first QOS level; and
in which the session server (20) checks a first access facility subscription status and subscription type associated with a first user of the first access facility, and allocates resources in response to the subscription checking.

25. A system as claimed in claim 24 in which said session server (20) includes a database of a first plurality of fees cross-referenced to the first plurality of QOS levels, and in which said session server (20) generates a first session service bill in response to the selection of the first QOS level.

## Patentansprüche

1. Verfahren zur Informationsübertragung auf einer angeforderten QoS(Dienstgüte)-Stufe, wobei das Verfahren umfasst:
Aufbau einer Beziehung zwischen einer ersten Vielzahl von Adressen (ADD1...ADDN) jeweiliger Eingänge an einem Dienstanforderungsserver (16) und einer ersten Vielzahl von QoS-Stufen, wobei jede Adresse der ersten Vielzahl von Adressen einer jeweiligen QoS-Stufe für die Informationsübertragung entspricht;
Auswahl einer erwünschten QoS-Stufe durch einen Benutzer für die Informationsübertragung, indem einer ersten Zugriffseinrichtung (13) eine Adresse der ersten Vielzahl von Adressen bereitgestellt wird, die der erwünschten QoS-Stufe entspricht;
Kommunizieren zwischen der ersten Zugriffseinrichtung (13) und einem Adresseneingang am Dienstanforderungsserver (16), wobei der Adresseneingang der Adresse entspricht;
Konfigurieren der ersten Zugriffseinrichtung (13), um Informationsübertragungsdienste auf der erwünschten QoS-Stufe bereitzustellen, mindestens teilweise auf Ressourcenzuweisungsinformation basierend, die ein Sitzungsserver der ersten Zugriffseinrichtung (13) zur Verfügung stellt; und
Empfangen eines ersten Dienstes, der die Informationsübertragung auf der erwünschten QoS-Stufe erlaubt.

2. Verfahren nach Anspruch 1, worin der Aufbau einer Beziehung zwischen der Adresse und der QoS-Stufe den Zugriff auf eine erste Abbildung (17) in einem Dienstanforderungsserver (16) enthält, die einzelne der Vielzahl von Adressen mit den entsprechenden QoS-Stufen in Beziehung setzt, über die mit dem Sitzungsserver (20) verhandelt werden kann.

3. Verfahren nach Anspruch 2, außerdem umfassend:
als Antwort auf die Auswahl der Adresse fordert der Dienstanforderungsserver (16) vom Sitzungsserver (20) die erwünschte QoS-Stufe an.

4. Verfahren nach Anspruch 1, 2 oder 3, worin die erste Zugriffseinrichtung (13) Informationsübertragungsdienste bereitstellt, außerdem umfassend:
Zuweisen von ersten Zugriffseinrichtungsressourcen, um als Antwort auf die vom Sitzungsserver (20) bereitgestellte Ressourcenzuweisungsinformation den ersten Dienst bereitzustellen.

5. Verfahren nach Anspruch 1, 2, 3 oder 4, außerdem umfassend:
Aufbau einer Beziehung zwischen einer ersten Vielzahl von Zugriffseinrichtungs-Dienstressourcen und einer ersten Vielzahl von QoS-Stufen.

6. Verfahren nach Anspruch 5, worin der Aufbau einer Beziehung zwischen Zugriffseinrichtungsressourcen und QoS-Stufen den Zugriff auf eine zweite Abbildung (21) im Sitzungsserver (20) enthält, die QoS-Stufen mit Diensten in Beziehung setzt, die zur Konfiguration der ersten Zugriffseinrichtung (13) verfügbar sind.

7. Verfahren nach einem vorhergehenden Anspruch 6, vor dem Schritt des Bereitstellens der Adresse außerdem umfassend:
Aufbau einer Beziehung zwischen einer ersten Vielzahl von Diensten und einer ersten Vielzahl von Dienstanforderungs-Serveradressen; und
Auswählen eines der Adresse entsprechenden Dienstes.

8. Verfahren nach Anspruch 7, worin der Aufbau einer Beziehung zwischen Diensten und Dienstanforderungs-Serveradressen den Zugriff auf eine Dienstzugriffsabbildung (15) in der ersten Zugriffseinrichtung (13) enthält, die jeden Dienst mit einer Adresse im Dienstanforderungsserver (16) in Beziehung setzt.

9. Verfahren nach einem vorhergehenden Anspruch, außerdem umfassend, dass vor dem Schritt des Bereitstellens der Adresse eine Benutzerkennung bereitgestellt wird; und
worin die Zuweisung von Zugriffseinrichtungsressourcen als Reaktion auf die bereitgestellte Benutzerkennung erfolgt.

10. Verfahren nach Anspruch 9, worin der Schritt des Bereitstellens der Adresse das Bereitstellen der Benutzerkennung an den Dienstanforderungsserver (16) enthält;
worin das Auswählen der erwünschten QoS-Stufe das Bereitstellen der Benutzerkennung an den Sitzungsserver (20) enthält, und
worin der Sitzungsserver (20) den Subskriptionsstatus einer Benutzerzugriffseinrichtung und den Subskriptionstyp prüft und Zugriffseinrichtungsressourcen als Antwort auf die Subskriptionsprüfung zuweist.

11. Verfahren nach einem vorhergehenden Anspruch, worin die erste Zugriffseinrichtung (13) aus der aus Folgendem bestehenden Gruppe ausgewählt wird: drahtgebundenem Telefon, Kabelmodem, Mobilfunk, drahtlosen Festsystemen und öffentlichen Internetsystemen.

12. Verfahren nach einem vorhergehenden Anspruch, worin mindestens eine Zugriffseinrichtung einer entfernten drahtlosen Kommunikationseinheit bereitgestellt ist und worin die Zuweisung von Dienstressourcen Prioritäten enthält, die aus der aus Folgendem bestehenden Gruppe ausgewählt werden:
Bandbreitenzuweisung, Kanalzugriffsprivilegien einer entfernten Einheit, Resequentialisieren von Daten in der Warteschlange und planmäßige Zeitzuweisungen.

13. Verfahren nach einem vorhergehenden Anspruch, worin eine zweite Zugriffseinrichtung (60) bereitgestellt ist, außerdem umfassend:
Konfigurieren der zweiten Zugriffseinrichtung (60), um Informationsübertragungsdienste auf der erwünschten QoS-Stufe bereitzustellen, mindestens teilweise auf Ressourcenzuweisungsinformation basierend, die der Sitzungsserver (20) der zweiten Zugriffseinrichtung (60) zur Verfügung stellt, worin der Empfang des ersten Dienstes die Informationsübertragung auf einer ersten der Adresse entsprechenden QoS-Stufe von der ersten Zugriffseinrichtung zur zweiten Zugriffseinrichtung erlaubt; und
Tunneln von Information von der ersten Zugriffseinrichtung (13) durch die zweite Zugriffseinrichtung (60) auf einer passenden QoS-Stufe.

14. Verfahren nach Anspruch 1, worin der Empfang des ersten Dienstes einen Dienst enthält, der aus der aus Folgendem bestehenden Gruppe von Diensten ausgewählt wird: Nichtechtzeit, Echtzeit, niedrige Verzögerung, Informationsübertragung mit hohem Durchsatz und Kombinationen der obenerwähnten Dienste.

15. System zum automatischen Anfordern einer QoS(Dienstgüte)-Stufe bei der Informationsübertragung, wobei das System umfasst:
eine erste Zugriffseinrichtung (13) zum Empfang einer Anforderung für einen auswählbaren Dienst;
einen Dienstanforderungsserver (16) mit einer Vielzahl von Adressen (ADD1...ADDN), wobei jede Adresse einer jeweiligen QoS-Stufe für die Informationsübertragung entspricht und der Dienstanforderungsserver (16) außerdem eine erste Vielzahl von Adresseneingängen und einen Ausgangsport hat, um - wenn eine der Vielzahl von Adressen als Antwort auf die von einem Benutzer in der Anforderung für den auswählbaren Dienst bereitgestellte Adresse in den Dienstanforderungsserver eingegeben wird - an den Sitzungsserver (20) eine erste QoS-Stufe auszugeben, die der einen der Vielzahl von Adressen entspricht, die in den Dienstanforderungsserver (16) eingegeben wird; und
einen Sitzungsserver (20) mit einem Eingang, der an den Dienstanforderungsserver (16) angeschlossen ist, um die erste QoS-Stufe zu empfangen, und einem Ausgang, um der ersten Zugriffseinrichtung (13) eine erste Ressourcenzuweisung bereitzustellen, die der ersten QoS-Stufe entspricht, wodurch die erste Zugriffseinrichtung dazu angepasst ist, den angeforderten Dienst bereitzustellen.

16. System nach Anspruch 15, worin die erste Zugriffseinrichtung (13) einen Eingang hat, der an den Ausgang des Sitzungsservers angeschlossen ist, um die erste Ressourcenzuweisung zu empfangen, wobei die erste Zugriffseinrichtung (13) einen ersten Dienst bereitstellt als Antwort auf den Empfang der ersten Ressourcenzuweisung.

17. System nach Anspruch 15 oder 16, worin der Dienstanforderungsserver (16) eine Datenbank (17) einer ersten Vielzahl von Adressen enthält, die mit einer ersten Vielzahl von QoS-Stufen eine wechselseitige Zuordnung bildet.

18. System nach Anspruch 15, 16 oder 17, worin der Sitzungsserver (20) eine Datenbank (21) einer ersten Vielzahl von QoS-Stufen enthält, die mit einer ersten Vielzahl von Zugriffseinrichtungs-Ressourcenzuweisungen eine wechselseitige Zuordnung bildet.

19. System nach Anspruch 15, 16, 17 oder 18, worin die erste Zugriffseinrichtung (13) eine Datenbank (15) einer ersten Vielzahl von Diensten enthält, die mit einer ersten Vielzahl von Dienstanforderungs-Serveradressen eine wechselseitige Zuordnung bildet, und einen Ausgang, um eine erste Adresse bereitzustellen, die einem ersten Dienst entspricht.

20. System nach einem der Ansprüche 15 bis 19, außerdem umfassend:
eine zweite Zugriffseinrichtung (60), um einen auswählbaren Dienst bereitzustellen mit einem Eingang, der an den Ausgang des Sitzungsservers (20) angeschlossen ist, und einem Eingang, der an den Ausgang der ersten Zugriffseinrichtung (13) angeschlossen ist;
worin der Sitzungsserver (20) eine zweite Ressourcenzuweisung für die zweite Zugriffseinrichtung (60) bereitstellt als Antwort auf den Empfang der ersten QoS-Stufe, und
worin der erste Dienst von der ersten Zugriffseinrichtung (13) durch die zweite Zugriffseinrichtung (60) auf einer passenden QoS-Stufe fortgesetzt wird.

21. System nach einem der Ansprüche 15 bis 20, worin die erste Zugriffseinrichtung (13) ein drahtloses Kommunikationsnetz ist, das eine entfernte Einheit und eine Mobilvermittlungsstelle (MSC) enthält;
worin der Sitzungsserver (20) Ressourcen zuweist, die aus der aus Folgendem bestehenden Gruppe ausgewählt werden: Bandbreitenzuweisung, Kanalzugriffsprivilegien einer entfernten Einheit, Resequentialisieren von Daten in der Warteschlange und planmäßige Zeitzuweisung.

22. System nach einem der Ansprüche 15 bis 21, worin die erste Zugriffseinrichtung (13) aus der aus Folgendem bestehenden Gruppe ausgewählt wird: drahtgebundenem Telefon, Kabelmodem, Mobilfunk, drahtlosen Festsystemen und öffentlichen Internetsystemen.

23. System nach Anspruch 16, worin der erste Dienst aus der aus Folgendem bestehenden Gruppe ausgewählt wird: Nichtechtzeit, Echtzeit, niedrige Verzögerung, Informationsübertragung mit hohem Durchsatz und Kombinationen der obenerwähnten Dienste.

24. System nach einem der Ansprüche 15 bis 23, worin die erste Zugriffseinrichtung (13) eine erste Benutzerkennung an den Dienstanforderungsserver (16) mit der ersten Adresse liefert;
worin der Dienstanforderungsserver (16) die erste Benutzerkennung an den Sitzungsserver (20) mit der ersten QoS-Stufe liefert; und
worin der Sitzungsserver (20) Status und Typ der Subskription zur ersten Zugriffseinrichtung prüft, die mit einem ersten Benutzer der ersten Zugriffseinrichtung assoziiert sind, und als Antwort auf die Subskriptionsprüfung Ressourcen zuweist.

25. System nach Anspruch 24, worin der Sitzungsserver (20) eine Datenbank einer ersten Vielzahl von Gebühren enthält, die mit der ersten Vielzahl von QoS-Stufen eine wechselseitige Zuordnung bildet und worin der Sitzungsserver (20) eine erste Sitzungsdienstrechnung als Antwort auf die Auswahl der ersten QoS-Stufe erzeugt.

## Revendications

1. Procédé pour transférer des informations à un niveau de qualité de service (QoS) demandé, le procédé comportant les étapes consistant à :
établir une relation entre une première pluralité d'adresses (ADD1...ADDN) d'entrées respectives sur un serveur de demande de service (16) et une première pluralité de niveaux de qualité de service (QoS), chaque adresse de la première pluralité d'adresses correspondant à un niveau de QoS respectif pour le transfert d'informations ;
sélectionner, par le biais d'un utilisateur, un niveau de QoS désiré pour le transfert d'informations en fournissant, à une première installation d'accès (13), une adresse de la première pluralité d'adresses correspondant au niveau de qualité de service (QoS) désiré ;
communiquer, entre la première installation d'accès (13) et une entrée d'adresse sur le serveur de demande de service (16), l'entrée d'adresse correspondant à l'adresse ;
configurer la première installation d'accès (13) pour fournir des services de transfert d'informations au niveau de qualité de service (QoS) désiré, sur la base, au moins en partie, d'informations d'affectation de ressources fournies par un serveur de session à la première installation d'accès (13) ; et
recevoir un premier service permettant le transfert d'informations au niveau de qualité de service (QoS) désiré.

2. Procédé selon la revendication 1, dans lequel l'établissement d'une relation entre l'adresse et un niveau de QoS inclut l'étape consistant à accéder à une première mappe (17), dans un serveur de demande de service (16), laquelle met en correspondance des adresses individuelles de la pluralité d'adresses à des niveaux de qualité de service (QoS) correspondant qui peuvent être négociés auprès du serveur de session (20).

3. Procédé selon la revendication 2, comportant en outre l'étape dans laquelle :
en réponse à la sélection de l'adresse, le serveur de demande de service (16) demande le niveau de qualité de service (QoS) désiré au serveur de session (20).

4. Procédé selon la revendication 1, 2 ou 3, dans lequel la première installation d'accès (13) fournit des services de transfert d'informations, et comportant en outre l'étape consistant à :
affecter des premières ressources d'installation d'accès pour fournir le premier service en réponse aux informations d'affectation de ressources fournies par le serveur de session (20).

5. Procédé selon la revendication 1, 2, 3 ou 4, comportant en outre l'étape consistant à :
établir une relation entre une première pluralité de ressources de service d'installation d'accès et une première pluralité de niveaux de qualité de service (QoS).

6. Procédé selon la revendication 5, dans lequel l'établissement d'une relation entre les ressources de service d'installation d'accès et les niveaux de QoS inclut l'étape consistant à accéder à une seconde mappe (21) dans le serveur de session (20) laquelle met en correspondance des niveaux de qualité de service (QoS) et des services qui sont disponibles pour une configuration de la première installation d'accès (13).

7. Procédé selon la revendication 6, lequel comporte en outre, préalablement à l'étape consistant à fournir l'adresse, les étapes consistant à :
établir une relation entre une première pluralité de services et une première pluralité d'adresses de serveur de demande de service ; et
sélectionner un service correspondant à l'adresse.

8. Procédé selon la revendication 7, dans lequel l'établissement d'une relation entre des services et des adresses de serveur de demande de service inclut l'étape consistant à accéder à une mappe d'accès de service (15), dans la première installation d'accès (13), laquelle met en correspondance chaque service et une adresse dans le serveur de demande de service (16).

9. Procédé selon l'une quelconque des revendications précédentes, lequel comporte en outre, préalablement à l'étape consistant à fournir l'adresse, l'étape consistant à délivrer une identification d'utilisateur ; et
dans lequel l'affectation de ressources d'installation d'accès est en réponse à l'identification d'utilisateur délivrée.

10. Procédé selon la revendication 9, dans lequel l'étape consistant à fournir l'adresse inclut l'étape consistant à fournir l'identification d'utilisateur au serveur de demande de service (16) ;
dans lequel la sélection du niveau de qualité de service désiré inclut l'étape consistant à fournir l'identification d'utilisateur au serveur de session (20), et
dans lequel le serveur de session (20) vérifie un type d'abonnement et un état d'abonnement de l'utilisateur à l'installation d'accès et, affecte les ressources d'installation d'accès en réponse à la vérification d'abonnement.

11. Procédé selon l'une quelconque des revendications précédentes, dans lequel la première installation d'accès (13) est sélectionnée à partir du groupe comportant des systèmes de téléphonie fixe, des systèmes de modem câble, des systèmes sans fil mobiles, des systèmes sans fil fixes, et des systèmes Internet publics.

12. Procédé selon l'une quelconque des revendications précédentes, dans lequel au moins une unité de communication sans fil à distance d'installation d'accès est fournie, et dans lequel l'affectation de ressources de service inclut des priorités sélectionnées à partir du groupe comportant : allocation de bande passante, privilèges d'accès de canal d'unité à distance, ré-ordonnancement de données mises en file d'attente, et affectations temporelles planifiées.

13. Procédé selon l'une quelconque des revendications précédentes, dans lequel une seconde installation d'accès (60) est fournie, et comprenant en outre les étapes consistant à :
configurer la seconde installation d'accès (60) pour fournir des services de transfert d'informations au niveau de QoS désiré sur la base, au moins en partie, d'informations d'affectation de ressources délivrées par le serveur de session (20) à la seconde installation d'accès (60), où la réception du premier service permet le transfert d'informations à un premier niveau de qualité de service (QoS), correspondant à l'adresse, de la première installation d'accès à la seconde installation d'accès ; et
mettre sous tunnel les informations provenant de la première installation d'accès (13) via la seconde installation d'accès (60) à un niveau de qualité de service (QoS) homogène.

14. Procédé selon la revendication 1, dans lequel la réception du premier service inclut un service sélectionné dans le groupe de services comportant des services non temps réel, temps réel, de faible retard, de transfert d'informations à débit élevé, et des combinaisons des services susmentionnés.

15. Système destiné à demander automatiquement un niveau de qualité de service (QOS) dans le transfert d'informations, le système comportant :
une première installation d'accès (13) pour recevoir une demande d'un service sélectionnable ;
un serveur de demande de service (16) présentant une pluralité d'adresses (ADD1...ADDN), chaque adresse correspondant à un niveau de qualité de service (QoS) respectif pour le transfert d'informations, le serveur de demande de service (16) ayant en outre une première pluralité d'entrées d'adresse et un port de sortie pour, lorsque l'une de la pluralité d'adresses est entrée dans le serveur de demande de service en réponse à l'adresse fournie par un utilisateur dans la demande de service sélectionnable, générer en sortie, au serveur de session (20), un premier niveau de QoS correspondant à ladite une adresse de la pluralité d'adresses entrées au niveau du serveur de demande de service (16) ; et
un serveur de session (20) présentant une entrée connectée audit serveur de demande de service (16) pour recevoir le premier niveau de qualité de service (QoS), et une sortie pour fournir à la première installation d'accès (13) une première affectation de ressources correspondant au premier niveau de qualité de service, moyennant quoi la première installation d'accès est apte à fournir le service demandé.

16. Système selon la revendication 15, dans lequel ladite première installation d'accès (13) a une entrée connectée à ladite sortie de serveur de session pour recevoir la première affectation de ressources, ladite première installation d'accès (13) fournissant un premier service en réponse à la réception de la première affectation de ressources.

17. Système selon la revendication 15 ou 16, dans lequel ledit serveur de demande de service (16) inclut une base de données (17) d'une première pluralité d'adresses référencées de manière croisée avec une première pluralité de niveaux de qualité de service (QoS).

18. Système selon la revendication 15, 16 ou 17, dans lequel ledit serveur de session (20) inclut une base de données (21) d'une première pluralité de niveaux de qualité de service référencés de manière croisée avec une première pluralité d'affectations de ressources d'installation d'accès.

19. Système selon la revendication 15, 16, 17 ou 18, dans lequel ladite première installation d'accès (13) inclut une base de données (15) d'une première pluralité de services référencés de manière croisée avec une première pluralité d'adresses de serveur de demande de service, et une sortie pour fournir une première adresse correspondant à un premier service.

20. Système selon l'une quelconque des revendications 15 à 19, comprenant en outre :
une seconde installation d'accès (60) pour fournir un service sélectionnable, présentant une entrée connectée à la sortie dudit serveur de session (20) et une entrée connectée à la sortie de ladite première installation d'accès (13) ;
dans lequel ledit serveur de session (20) fournit une seconde affectation de ressources à ladite seconde installation d'accès (60) en réponse à la réception du premier niveau de QoS, et
dans lequel le premier service se poursuit de ladite première installation d'accès (13) via la seconde installation d'accès (60) à un niveau de qualité de service (QoS) homogène.

21. Système selon l'une quelconque des revendications 15 à 20, dans lequel ladite première installation d'accès (13) est un réseau de communication sans fil comportant une unité à distance et un centre de commutation du service mobile (MSC) ;
dans lequel ledit serveur de session (20) affecte des ressources sélectionnées dans le groupe comportant allocation de bande passante, privilèges d'accès de canal d'unité à distance, ré-ordonnancement de données mises en file d'attente, et affectations temporelles planifiées.

22. Système selon l'une quelconque des revendications 15 à 21, dans lequel ladite première installation d'accès (13) est sélectionnée à partir du groupe comportant des systèmes de téléphonie fixe, des systèmes de modem câble, des systèmes sans fil mobiles, des systèmes sans fil fixes, et des systèmes Internet publics.

23. Système selon la revendication 16, dans lequel le premier service est sélectionné dans le groupe comportant des services non temps réel, temps réel, de faible retard, de transfert d'informations à débit élevé, et des combinaisons des services susmentionnés.

24. Système selon l'une quelconque des revendications 15 à 23, dans lequel ladite première installation d'accès (13) fournit une première identité d'utilisateur audit serveur de demande de service (16) avec la première adresse ;
dans lequel ledit serveur de demande de service (16) fournit la première identité d'utilisateur audit serveur de session (20), avec le premier niveau de qualité de service (QoS) ; et
dans lequel le serveur de session (20) vérifie un état et un type d'abonnement à la première installation d'accès, associés à un premier utilisateur de la première installation d'accès et affecte des ressources en réponse à la vérification d'abonnement.

25. Système selon la revendication 24, dans lequel ledit serveur de session (20) inclut une base de données d'une première pluralité de frais mis en référence croisée à la première pluralité de niveaux de qualité de service, et dans lequel ledit serveur de session (20) génère une première facture de service de session en réponse à la sélection du premier niveau de qualité de service (QoS).
